# DEMANDE DE BREVET EUROPEEN

(11) **EP 1 219 378 A1**
(43) Date de publication de la demande: **03.07.2002**
(21) Numéro de dépôt: 01420240.2
(22) Date de dépôt: 24.12.2001
(51) Int. Cl.: B23K 9/32

(54) **Procödé pour assurer une opération de traitement sur une torche de soudage notamment du type MIG/MAG et intallation de soudrage en faisant application**

(30) Priorité: 29.12.2000 FR 0017320
(71) Demandeur: Landret, Daniel, 71960 Pierreclos (FR); Crespo, Marc, 39120 Neublans (FR)
(72) Inventeur: Landret, Daniel, 71960 Pierreclos (FR); Crespo, Marc, 39120 Neublans (FR)
(74) Mandataire: Thibault, Jean-Marc

(57) **Abrégé**

Installation de soudage du type comportant une torche de soudage **(2)** reliée, par un faisceau d'alimentation **(3),** à une source d'énergie **(4**_{**2**}**)** et un appareil motorisé de traitement **(22)** comportant au moins un organe moteur relié à au moins un système assurant une opération de traitement sur la torche de soudage **(2)**, caractérisée en ce que l'appareil motorisé de traitement **(22)** comporte un système de raccordement adapté, lorsque la torche de soudage **(2)** est positionnée en relation de l'appareil de traitement **(22)**, à assurer une connexion entre le circuit d'alimentation de l'organe moteur et le faisceau d'alimentation **(3)** de la torche, en vue d'amener l'énergie nécessaire au fonctionnement de l'appareil motorisé de traitement **(22)** et en ce qu'elle comporte:
- un dispositif de commande **(30)** permettant de piloter l'exécution d'une opération de traitement sur la torche de soudage **(2)**,
- et une unité de commande **(35)** pilotée par le dispositif de commande **(30)** et permettant de commander l'alimentation en énergie de l'organe moteur de l'appareil de traitement **(22)**, par l'intermédiaire du faisceau d'alimentation **(3)** de la torche de soudage **(2)**.

## Description

L'objet de l'invention concerne le domaine technique des torches de soudage au sens général, à caractère manuel, semi-automatique ou automatique.

L'objet de l'invention concerne, de manière préférée, le domaine des torches de soudage du type MIG/MAG c'est-à-dire équipées d'un système d'alimentation en gaz anti-oxydant et d'un système d'amenée d'un fil de soudage.

L'objet de l'invention concerne plus précisément les moyens techniques adaptés pour assurer une opération de traitement et en particulier de nettoyage, des torches de soudage.

Dans le domaine technique préféré ci-dessus, une torche de soudage comporte généralement une buse de soudage ayant une forme en col de cygne et raccordée par l'intermédiaire d'un faisceau souple, à un poste de soudure. Une gaine flexible renfermant un fil de soudage traverse le faisceau souple et la buse de soudage afin de déboucher à l'extrémité libre de la buse. Le fil de soudage est déroulé à partir d'un dévidoir situé au niveau du poste de soudure ou déporté par rapport à la source d'alimentation en gaz et en énergie électrique.

De manière classique, le poste de soudure est associé à une source alimentant électriquement la torche de soudage, par l'intermédiaire d'un circuit d'alimentation électrique constitué d'une part par le fil de soudage relié généralement à la borne positive de la source et, d'autre part, par un câble de raccordement entre la pièce à souder et la borne généralement négative ou masse de la source.

Dans le domaine technique des torches de soudage du type MIG/MAG, le faisceau de raccordement comporte également, un conduit de circulation pour un gaz, assurant son amenée jusqu'à l'extrémité libre de la buse dans un espace annulaire compris entre un tube contact pour le fil de soudage et un manchon de diffusion. Le gaz permet de chasser l'oxygène de la zone de soudage dans laquelle se produit l'arc électrique entre le fil de soudage et la pièce à souder.

Lors de l'utilisation de la torche de soudage, des projections de métal en fusion viennent adhérer aux divers éléments métalliques constitutifs de la torche de soudage. L'accumulation de ces projections conduit à perturber l'écoulement du gaz de protection et à provoquer des court-circuits préjudiciables à la durée de vie de la torche et à la qualité de la soudure.

Pour remédier à ces inconvénients, il apparaît nécessaire de nettoyer à intervalles réguliers les torches de soudage. Dans l'état de la technique, de nombreuses solutions ont été proposées pour assurer le nettoyage de ces torches. Par exemple, le brevet US. 5 070 568 décrit un appareil de nettoyage placé à proximité du lieu de soudage et présentant un embout de réception et de centrage pour la buse de la torche de soudage. Cet appareil comporte un organe de nettoyage, tel que des moyens de raclage permettant d'éliminer les projections adhérant sur les éléments constitutifs de la buse. L'organe moteur des moyens de réglage est relié par un câble électrique à un réseau d'alimentation électrique. Or, il apparaît que dans de nombreuses applications, le lieu de soudage change de sorte qu'il convient de déplacer l'appareil de nettoyage, ce qui impose à chaque fois de débrancher et de rebrancher l'appareil de nettoyage au réseau d'alimentation électrique.

L'objet de l'invention vise donc à remédier aux inconvénients énoncés ci-dessus en proposant un procédé permettant d'assurer automatiquement une opération de traitement sur une torche de soudage par l'intermédiaire d'un appareil de traitement présentant la possibilité d'être facilement déplaçable.

Pour atteindre un tel objectif le procédé selon l'invention consiste à assurer au moins une opération de traitement sur une torche de soudage, l'opération de traitement étant assurée par l'intermédiaire d'un appareil motorisé de traitement comportant un organe moteur relié à un système de traitement. Le procédé selon l'invention comporte les étapes suivantes :
- assurer une connexion entre l'organe moteur de l'appareil de traitement et le faisceau d'alimentation de la torche lorsque la torche est positionnée en relation de l'appareil de traitement,
- commander l'exécution d'une opération de traitement sur la torche de soudage,
- et assurer l'alimentation en énergie de l'organe moteur de l'appareil de traitement, par l'intermédiaire du faisceau d'alimentation de la torche de soudage.

L'objet de l'invention vise également à proposer une installation de soudage du type comportant :
- une torche de soudage reliée, par un faisceau d'alimentation, à une source d'énergie,
- et un appareil motorisé de traitement comportant au moins un organe moteur relié à au moins un système assurant une opération de traitement sur la torche de soudage.

Selon l'invention l'appareil de traitement comporte un système de raccordement adapté, lorsque la torche de soudage est positionnée en relation de l'appareil de traitement, à assurer une connexion entre le circuit d'alimentation de l'organe moteur et le faisceau d'alimentation de la torche, en vue d'amener l'énergie nécessaire au fonctionnement de l'appareil motorisé de traitement et en ce que l'installation comporte :
- un dispositif de commande permettant de piloter l'exécution d'une opération de traitement sur la torche de soudage,
- et une unité de commande pilotée par le dispositif de commande et permettant de commander l'alimentation en énergie de l'organe moteur de l'appareil de traitement par l'intermédiaire du faisceau d'alimentation de la torche de soudage.

Diverses autres caractéristiques ressortent de la description faite ci-dessus en référence aux dessins annexés qui montrent, à titre d'exemples non limitatifs, des forme de réalisation de l'objet de l'invention.

La **fig. 1** est une vue schématique montrant un exemple d'une installation de soudage électrique conforme à l'invention.

La **fig. 2** est une vue de détail schématique d'un détail caractéristique de l'objet de l'invention.

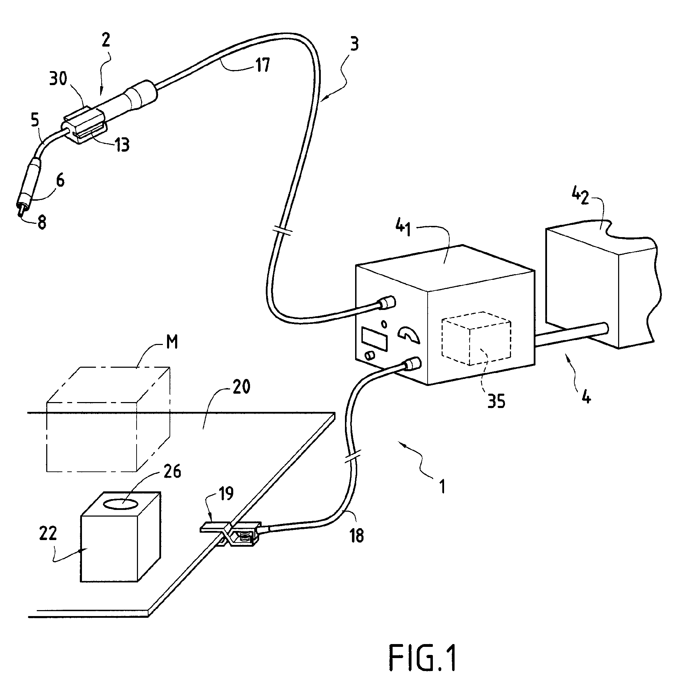

Tel que cela ressort plus précisément de la **fig. 1**, l'installation **1** permet d'assurer des opérations de soudage sur une pièce métallique M de tous types. Cette installation **1** comporte de manière classique, une torche de soudage **2** munie d'un faisceau de raccordement **3** à un poste de soudure **4,** constitué, dans l'exemple illustré, en deux parties, à savoir un dévidoir **4**_{**1**} relié à une source **4**_{**2**} de fourniture d'au moins une énergie. La torche de soudage **2** comporte une buse de soudage **5** en forme de col de cygne à l'extrémité de laquelle est monté un manchon diffuseur **6.**

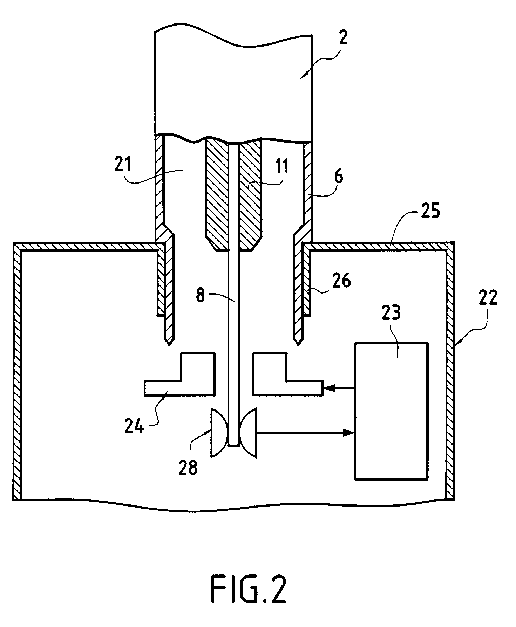

L'installation **1** comporte également, dans l'exemple illustré d'une torche de type MIG/MAG, un fil de soudage **8** enrobé généralement par une gaine et traversant axialement la torche **2** et le faisceau de raccordement **3** par l'intermédiaire d'un passage aménagé à l'intérieur de la torche **2** et du faisceau de raccordement. Le fil de soudage **8** est adapté pour déboucher à l'extrémité libre du manchon diffuseur **6** en étant guidé, comme illustré par la **fig. 2**, par un tube contact **11** monté à l'intérieur du manchon diffuseur **6.** L'autre extrémité du fil de soudage **8** est reliée à un dévidoir **4**_{**1**}, connu en soi, faisant partie du poste de soudure **4.** Le tube contact **11** est réalisé en un métal bon conducteur d'électricité de façon que le fil de soudage **8** puisse faire fonction d'électrode. Classiquement, la torche de soudage **2** comporte également une gâchette **13** de commande permettant d'assurer et de piloter les différentes opérations pour l'exécution des opérations de soudage, telles que l'amenée et l'arrêt de la fourniture d'un gaz, la commande de l'alimentation électrique du fil de soudage ainsi que le pilotage du déroulement du fil de soudage **8.**

Le poste de soudure **4** comporte également, en tant que source de fourniture d'une énergie **4**_{**2**}, une source d'alimentation électrique de la torche **2** par l'intermédiaire d'un circuit d'alimentation électrique **17.** La source électrique **4**_{**2**}, qui peut être associée ou délocalisée par rapport au poste de soudure **4,** est connectée, d'une part, au fil de soudage **8** et, d'autre part, à la pièce à souder **M** par l'intermédiaire d'un câble de masse **18** constituant ainsi, avec le fil de soudage **8,** le circuit d'alimentation électrique **17.** Ainsi, le circuit d'alimentation **17** est formé, au moins en partie, par le faisceau **3.** De manière classique, la source d'alimentation **4**_{**2**} est une source de tension continue dont la borne positive est reliée au fil de soudage **8,** tandis que le câble de masse **18** est relié à la borne négative ou à la masse de la source d'alimentation **4**_{**2**} Par exemple, le câble de raccordement **18** est muni d'une pince **19** permettant son montage sur une table de travail métallique **20** sur laquelle est posée la pièce métallique **M** à souder.

La torche de soudage **2** comporte également, dans l'exemple illustré, une canalisation **21** d'amenée d'un fluide, tel qu'un gaz anti-oxydant, débouchant à l'extrémité libre de la torche de soudage **2** en entourant le fil de soudage **8.** Cette canalisation d'amenée **21** traverse la buse **5** et le faisceau de raccordement **3.** Le poste de soudure **4** comporte, également en tant que source de fourniture d'une énergie **4**_{**2**}, une source de production de gaz reliée à la canalisation d'amenée **21.**

Conformément à l'invention, l'installation de soudage **1** comporte un appareil motorisé de traitement **22** adapté pour exécuter au moins une opération de traitement sur la torche de soudage **2.** Tel que cela ressort plus précisément de la **fig. 2,** l'appareil motorisé de traitement **22** comporte au moins un organe moteur **23** relié à au moins un système **24** assurant une opération de traitement sur la torche de soudage **2.** De préférence, l'appareil motorisé de traitement **22** comporte un carter **25** dans lequel est aménagé un embout de réception et de positionnement **26** pour la torche de soudage **2.**

Conformément à l'invention, l'appareil motorisé de traitement **22** comporte un système **28** de raccordement adapté, lorsque la torche de soudage **2** est positionnée en relation de l'appareil de traitement, à assurer une connexion entre le circuit d'alimentation de l'organe moteur **23** et le faisceau d'alimentation **3** de la torche, en vue d'amener l'énergie nécessaire au fonctionnement de l'appareil motorisé de traitement **22.** Dans l'exemple illustré sur les dessins, le système de raccordement **22** est du type électrique et se trouve adapté, lorsque la torche de soudage **2** est positionnée en relation de l'appareil **22,** de manière à assurer une connexion électrique entre le circuit d'alimentation électrique **17** de la torche et le circuit d'alimentation électrique de l'organe moteur **23** de l'appareil de traitement. En d'autres termes, le système de raccordement **28** permet d'assurer une connexion électrique entre le circuit d'alimentation électrique **17** de la torche de soudage et le circuit électrique d'alimentation de l'organe moteur **23.**

Dans l'exemple de réalisation illustré à la **fig. 2**, le système de raccordement électrique **28** est destiné à venir en contact, lorsque la torche de soudage **2** est positionnée sur l'appareil de traitement, avec le fil de soudage **8** délivré par la torche de soudage **2.** Dans cet exemple, le système de raccordement électrique **28** peut être constitué par l'intermédiaire de balais avec lesquels entre en contact le fil de soudage **8** lorsque la torche est positionnée dans l'embout de réception **26.** Le fil de soudage **8** se trouve ainsi relié par l'intermédiaire du système de raccordement **28,** au circuit d'alimentation électrique de l'organe moteur **23** qui est également relié au câble de raccordement **18** par sa liaison avec la carcasse métallique de l'appareil **22** en contact avec la table métallique **20.**

Il est à noter que le système de raccordement électrique **28** peut être réalisé de manière différente en venant par exemple en contact avec le tube contact **11** du fil de soudage **8** lorsque la torche est positionnée dans l'embout de réception **26.**

L'installation **1** selon l'invention comporte également un dispositif de commande **30** permettant de piloter l'exécution, grâce à un système **24,** d'une opération de traitement sur la torche de soudage **2.** Selon un exemple de réalisation, le dispositif de commande **30** peut être réalisé par un bouton manuel de commande équipant la torche de soudage **2** ou correspondre à une position déterminée de la gâchette de soudage **13,** identique ou différente de la position permettant de piloter les différentes opérations de soudage. Le dispositif de commande **30** peut être également constitué par un dispositif détectant automatiquement le positionnement de la torche de soudage **2** en relation de l'appareil de traitement **22.** Dans cet exemple de réalisation, l'appareil motorisé de traitement **22** comporte un capteur alimenté par exemple par une pile intégrée dans l'appareil de traitement et capable d'envoyer une information à distance avertissant du positionnement de la torche de soudage **2** en relation de l'appareil de traitement **22.**

L'installation **1** selon l'invention comporte également une unité de commande **35** pilotée par le dispositif de commande **30** et permettant de commander l'alimentation en énergie de l'organe moteur **23,** qui est véhiculée par l'intermédiaire du faisceau d'alimentation **3** de la torche de soudage **2.** En d'autres termes, l'unité de commande **35** permet que l'organe moteur **23** se trouve relié à une source d'énergie adaptée pour assurer son fonctionnement normal. Dans l'exemple illustré sur les dessins, l'unité de commande **35** permet d'assurer l'alimentation électrique de l'organe moteur **23** de l'appareil de traitement **22,** par l'intermédiaire du circuit d'alimentation électrique **17** de la torche de soudage **2.** Cette unité de commande **35** est de préférence située au niveau du dévidoir **4**_{**1**}. L'unité de commande **35** permet de piloter l'alimentation de l'organe moteur **23** selon une valeur de tension fixe adaptée au bon fonctionnement de cet organe moteur, alors que, lors du fonctionnement de la torche **2** en mode de soudage, la tension d'alimentation peut être fixée à des valeurs différentes.

La mise en oeuvre des opérations de traitement découle directement de la description qui précède.

Après une utilisation classique de la torche en mode de soudage, il convient de procéder à un traitement sur la torche de soudage **2.** A cet effet, l'utilisateur introduit la torche **2** par son manchon diffuseur **6** à l'intérieur de l'embout de réception **26** de l'appareil de traitement **22.** Le montage de la torche **2** sur l'appareil de traitement **22,** conduit au raccordement électrique, par le système **28,** entre le circuit d'alimentation électrique de l'organe moteur **23** et le circuit d'alimentation électrique **17** de la torche. Le dispositif de commande **30** qui, soit est piloté manuellement dans le cas d'un bouton de commande, soit détecte automatiquement la présence de la torche de soudage **2,** envoie un signal à l'unité de commande **35** qui fait en sorte que le circuit d'alimentation **17** se trouve alimenté par une tension de valeur déterminée permettant le fonctionnement de l'organe moteur **23.** Dans la mesure où le circuit électrique de l'organe moteur **23** se trouve alimenté, par une tension de fonctionnement, par l'intermédiaire du circuit habituel d'alimentation électrique du fil de soudage **8,** l'organe moteur **23** peut être commandé pour assurer sa fonction de traitement. Cette unité de commande **35** est adaptée pour arrêter le fonctionnement du système de traitement **24** au terme d'une durée déterminée.

Tel que cela ressort de la description qui précède, le procédé selon l'invention permet ainsi de commander le fonctionnement d'un appareil motorisé de traitement **22** sans la mise en oeuvre d'un câble spécifique de raccordement pour cet appareil, dans la mesure où l'énergie électrique est apportée par l'intermédiaire du circuit habituel d'alimentation électrique de la torche **2,** c'est-à-dire au moins en partie par le faisceau d'alimentation **3.**

Dans la description qui précède, l'énergie amenée par le faisceau d'alimentation **3** est électrique. Il est clair que l'énergie amenée par le faisceau d'alimentation à l'organe moteur **23** de l'appareil motorisé de traitement **22** peut être de nature différente. Par exemple, il peut être envisagé d'amener une énergie de type fluidique, tel qu'un gaz (air), à l'appareil motorisé de traitement **22** qui comporte alors un organe moteur **23** susceptible d'être commandé par une telle énergie. Selon cet exemple de réalisation, le système de raccordement **28** est du type fluidique et est destiné, lorsque la torche de soudage est positionnée en relation de l'appareil de traitement **22,** à assurer une connexion étanche entre le circuit d'alimentation fluidique de l'organe moteur **23** et un circuit d'amenée d'un fluide faisant partie du faisceau d'alimentation **3.** Ce circuit d'amenée peut être constitué par la canalisation d'amenée **21** du gaz ou par une canalisation supplémentaire aménagée dans le faisceau d'alimentation **3.** Ce système de raccordement fluidique **28** peut être réalisé par l'engagement de la buse de soudage **5** dans l'embout de réception **26** muni d'un joint d'étanchéité.

Il est clair que l'organe moteur **23** qui peut être associé à un moto-réducteur peut commander différents systèmes de traitement **24.** Par exemple, l'organe moteur **23** peut assurer la rotation et éventuellement le déplacement en rapprochement-écartement par rapport à la torche de soudage **2,** d'un système de traitement **24** constitué par l'intermédiaire de moyens de raclage des différents éléments constitutifs de la torche de soudage **2.** Ces moyens de raclage permettent ainsi d'éliminer des projections de métal adhérents sur la buse **5.**

Bien entendu, il peut être envisagé que le système de traitement **24** assure un autre traitement au niveau de la buse **6** tel que par exemple l'analyse du gaz délivré au niveau de la buse lors d'une opération d'essai ou d'étalonnage.

Selon une caractéristique préférée de réalisation, l'organe moteur **23** peut commander également un élément de coupe pour le fil de soudage **8** en fin d'opération de traitement. La coupe du fil de soudage **8** permet ainsi de disposer d'une torche de soudage **2** prête à une utilisation ultérieure.

Selon une autre caractéristique préférée de réalisation, l'unité de commande **35** est adaptée pour assurer au terme de l'opération de traitement, l'injection d'un flux d'air de nettoyage, par exemple dans une canalisation supplémentaire aménagée dans le faisceau **3** ou dans la canalisation d'amenée du gaz anti-oxydant, afin d'assurer l'enlèvement des particules de la torche de soudage **2.** Il est à noter que l'unité de commande **35** peut être adaptée également pour assurer, au terme de l'opération de traitement, l'injection d'un produit anti-adhérant, par exemple dans une canalisation supplémentaire aménagée dans le faisceau **3**, et débouchant au niveau de la buse.

Le but de l'invention vise donc une installation permettant d'assurer de manière pratique les opérations de traitement d'une torche de soudage **2** tout en permettant de déplacer facilement l'appareil de traitement **22** qui n'est relié à aucune source d'énergie lorsque la torche **2** ne coopère pas avec l'appareil de traitement **22.** Dans l'exemple décrit ci-dessus, la torche de soudage est de type MIG/MAG. Il est clair que l'objet de l'invention peut être mis en oeuvre pour d'autres types de soudage, tels que TIG par exemple.

Par ailleurs, il est à noter que la torche de soudage **2** pour la mise en oeuvre de l'invention peut être de type classique ou comporter le dispositif de commande **30** et/ou être équipée, au niveau du faisceau de raccordement **3,** de moyens de raccordement à l'unité de commande **35**.

## Revendications

1. Installation de soudage du type comportant
- une torche de soudage **(2)** reliée, par un faisceau d'alimentation **(3),** à une source de fourniture d'au moins une d'énergie **(4**_{**2**}**)**,
- et un appareil motorisé de traitement **(22)** comportant au moins un organe moteur **(23)** relié à au moins un système **(24)** assurant une opération de traitement sur la torche de soudage **(2),**
**caractérisée en ce que** l'appareil motorisé de traitement **(22)** comporte un système de raccordement **(28)** adapté, lorsque la torche de soudage **(2)** est positionnée en relation de l'appareil de traitement **(22),** à assurer une connexion entre le circuit d'alimentation de l'organe moteur **(23)** et le faisceau d'alimentation **(3)** de la torche, en vue d'amener l'énergie nécessaire au fonctionnement de l'appareil motorisé de traitement **(22)** et **en ce qu'**elle comporte
- un dispositif de commande **(30)** permettant de piloter l'exécution d'une opération de traitement sur la torche de soudage **(2),**
- et une unité de commande **(35)** pilotée par le dispositif de commande **(30)** et permettant de commander l'alimentation en énergie de l'organe moteur **(23)** de l'appareil de traitement **(22),** par l'intermédiaire d'au moins le faisceau d'alimentation **(3)** de la torche de soudage **(2).**

2. Installation selon la revendication 1, **caractérisée en ce que** le système de raccordement **(28)** est du type électrique et est destiné, lorsque la torche de soudage **(2)** est positionnée en relation de l'appareil de traitement **(22),** à assurer la connexion électrique entre le circuit d'alimentation électrique de l'organe moteur **(23)** et un circuit d'alimentation électrique **(17)** faisant partie du faisceau d'alimentation.

3. Installation selon la revendication 2, **caractérisée en ce que** le système de raccordement électrique **(28)** est destiné à venir en contact, lorsque la torche de soudage **(2)** est positionnée en relation de l'appareil de traitement **(22),** avec un fil de soudage **(8)** délivré par la torche de soudage **(2)** ou un tube contact **(11)** d'un fil de soudage **(8),** formant au moins en partie le circuit d'alimentation électrique **(17).**

4. Installation selon la revendication 1, **caractérisée en ce que** le système de raccordement **(28)** est du type fluidique et est destiné, lorsque la torche de soudage est positionnée en relation de l'appareil de traitement **(22),** à assurer une connexion étanche entre le circuit d'alimentation fluidique de l'organe moteur **(23)** et un circuit d'amenée d'un fluide faisant partie du faisceau d'alimentation **(3).**

5. Installation selon la revendication 1, **caractérisée en ce que** l'organe moteur **(23)** de l'appareil de traitement **(22)** assure la rotation et éventuellement un déplacement en rapprochement-écartement du système de traitement **(24)** par rapport à la torche de soudage **(2).**

6. Installation selon l'une des revendications 2 à 5, **caractérisée en ce que** l'organe moteur **(23)** est adapté pour commander un élément de coupe du fil de soudage **(8).**

7. Installation selon la revendication 1, **caractérisée en ce que** le dispositif de commande **(30)** permettant de piloter l'exécution d'une opération de traitement est constitué par un bouton manuel de commande équipant la torche de soudage **(2).**

8. Installation selon la revendication 1, **caractérisée en ce que** le dispositif de commande **(30)** permettant de piloter l'exécution d'une opération de traitement est constitué par un dispositif détectant automatiquement le positionnement de la torche de soudage **(2)** en relation de l'appareil de traitement **(22).**

9. Installation selon la revendication 1, **caractérisée :**
- **en ce que** la torche de soudage **(2)** comporte un faisceau de raccordement **(3)** incluant le passage pour un fil de soudage **(8)** et une canalisation **(21)** d'amenée d'un fluide,
- et **en ce que** l'unité de commande **(35)** est adaptée pour assurer, au terme de l'opération de traitement, l'injection d'un flux d'air de nettoyage au niveau de la buse de la torche.

10. Installation selon la revendication 9, **caractérisée en ce que** l'unité de commande **(35)** est adaptée pour assurer l'injection dau niveau de la buse de la torche, d'un gaz lors de l'opération de soudage et /ou d'un produit anti-adhérent au terme de l'opération de traitement.

11. Torche de soudage, notamment du type MIG/MAG comportant une buse de soudage **(5)** et un faisceau de raccordement **(3),** traversés par une canalisation **(21)** d'amenée d'un gaz et par un fil de soudage **(8), caractérisée en ce qu'**elle comporte des moyens de raccordement à une unité de commande **(35)** faisant partie de l'installation conforme à la revendication 1.

12. Torche de soudage selon la revendication 11, **caractérisée en ce qu'**elle comporte un dispositif de commande **(30)** permettant de piloter l'exécution d'une opération de traitement par l'appareil motorisé de traitement **(22).**

13. Procédé pour assurer au moins une opération de traitement sur une torche de soudage **(2),** l'opération de traitement étant assurée par l'intermédiaire d'un appareil motorisé de traitement **(22)** comportant un organe moteur **(23)** relié à un système de traitement **(24) caractérisé en ce qu'**il comporte les étapes suivantes :
- assurer une connexion entre l'organe moteur **(23)** de l'appareil de traitement **(22)** et le faisceau d'alimentation **(17)** de la torche **(2)** lorsque la torche est positionnée en relation de l'appareil de traitement,
- commander l'exécution d'une opération de traitement sur la torche de soudage **(2),**
- et assurer l'alimentation en énergie de l'organe moteur **(23)** de l'appareil de traitement **(22)** par l'intermédiaire du faisceau d'alimentation **(17)** de la torche de soudage.

14. Procédé selon la revendication 12 **caractérisé en ce qu'**il consiste à assurer une alimentation en air comprimé de la torche de soudage **(2)** au terme de l'opération de traitement, afin d'assurer le nettoyage de la torche.
